# EUROPEAN PATENT SPECIFICATION

(11) **EP 2 796 700 B1**
(45) Date of publication and mention of the grant of the patent: **22.02.2017**
(21) Application number: 13185456.4
(22) Date of filing: 20.09.2013
(51) Int. Cl.: F02M 21/00

(54) **System for supplying liquefied natural gas fuel**
System zur Zufuhr von verflüssigtem Naturgaskraftstoff
Système d'alimentation en carburant de gaz naturel liquéfié

(30) Priority: 24.04.2013 KR 20130045708
(43) Date of publication of application: 29.10.2014
(73) Proprietor: Hyundai Heavy Industries Co., Ltd., Ulsan 682-792 (KR)
(72) Inventor: Kang, Min Ho, Busan (KR); Han, Ju Seog, Ulsan (KR); Heo, Hee Seung, Ulsan (KR)
(74) Representative: Betten & Resch

(56) References cited:
- EP-A1- 1 990 272
- US-A- 5 590 535
- US-A1- 2002 085 921

## Description

### BACKGROUND

An embodiment of the present invention relates to a system for supplying LNG fuel.

A ship is a transport vehicle for sailing across the ocean, carrying bulk of minerals, crude oil, natural gas, several thousands of containers, etc., A ship is made of steel and moves by propulsion generated through the rotation of a propeller when it is floating on a water plane by buoyancy.

A ship generates propulsion by driving an engine. The engine moves a piston using a gasoline or diesel and rotates a crankshaft by a reciprocating motion performed by the, so that a shaft connected to the crankshaft rotates to drive the propeller.

However, recently, a Liquefied Natural Gas (LNG) carrier is LNG fuel supplying method of driving an engine using LNG as a fuel. This LNG fuel supplying method has also been used in other ships in addition to the LNG carrier.

It is generally known that LNG is clean fuel and LNG deposits are greater than oil reserves. LNG consumption has surged with development of a mining technique and a transporting technique. Methane, which is the main component of LNG, is generally kept in a liquid state at a temperature of -162°C or less under 1 atmospheric pressure. The volume of the liquefied methane is approximately 1/600 of that of methane in a gaseous state as a standard state, and the specific gravity of the liquefied methane is 0.42, which is about half of the specific gravity of the crude oil.

However, the temperature and the pressure, etc. for driving the engine may be different from the state of LNG stored in a tank. Accordingly, research and development of a technique for supplying LNG to an engine by controlling the temperature and the pressure, etc. of the stored LNG in a liquid state has continued.
EP 1 990 272 A1 relates to a fuel gas supply system of an LNG carrier for supplying fuel gas to a high-pressure gas injection engine of an LNG carrier, wherein LNG is extracted from an LNG storage tank (1) of the LNG carrier, compressed at a high pressure, gasified, and then supplied to the high-pressure gas injection engine.
The fuel gas supply system of EP 1 990 272 A1 has a problem in case of the event that the engine is expected to be stopped as overpressure occurs upstream of the engine due to stop of the engine.

### SUMMARY OF THE INVENTION

An embodiment of the present invention provides a system for supplying LNG fuel for returning further fuel through a second return line in the event that internal pressure of the fuel supplying line is not reduced to a pressure less than a predetermined pressure although the fuel is returned through a first return line, thereby preventing overpressure at upstream of the engine.

A system for supplying LNG fuel is defined in claim 1. It includes a fuel supplying line connected from a fuel storage tank to an engine and including a pressure measuring sensor, a pump provided on the fuel supplying line and configured to pressurize fuel outputted from the fuel storage tank, a heat exchanger provided on the fuel supplying line between the pump and the engine and configured to heat the fuel outputted from the pump, a first return line provided at a front end of the heat exchanger on the fuel supplying line and configured to return the fuel from the fuel supplying line, and a second return line provided at a rear end of the heat exchanger on the fuel supplying line and configured to return the fuel from the fuel supplying line, wherein the fuel is returned through the first return line or the second return line when pressure of the fuel is sensed to be more than a predetermined pressure by the pressure measuring sensor.

The first return line and the second return line are connected to the fuel storage tank, and the fuel may be returned to the fuel storage tank through the first return line or the second return line.

The system may further include an auxiliary tank located at a downstream of the first return line and the second return line.

The auxiliary tank may be a vapor-liquid separator.

The system may further include an upstream overpressure valve provided on the first return line, and configured to adjust an amount of supply of the fuel; and a downstream overpressure valve provided on the second return line, and configured to adjust an amount of supply of the
fuel.

The predetermined pressure may include a first predetermined value and a second predetermined value, the upstream overpressure valve may open the first return line when the pressure measuring sensor senses a pressure more than the first predetermined value, and the downstream overpressure valve may open the second return line when the pressure measuring sensor senses a pressure more than the second predetermined value.

The second predetermined value may be higher than the first predetermined value.

The first predetermined value may be higher than a pressure required for the engine by 5bar, and the second predetermined value may be higher than the pressure required for the engine by 10bar.

The pump may include a high pressure pump for pressurizing the fuel outputted from the fuel storage tank to a pressure of 200bar to 400bar.

The pump may further include a boosting pump provided on the fuel supplying line between the fuel storage tank and the high pressure pump, and configured to pressurize the fuel stored in the fuel storage tank or outputted from the fuel storage tank and supply the fuel to the high pressure pump.

The boosting pump may pressurize the fuel outputted from the fuel storage tank to a pressure of 1bar to 25bar.

A system for supplying LNG fuel of the present invention prevents LNG outputted from a pump from being supplied to an engine when an engine is suddenly stopped, thereby preventing overpressure at an upstream of the engine such as the pump, a heat exchanger or a fuel supplying line. As a result, a shutdown of the system due to power failure, errors, etc. may be reduced.

The system may further return LNG through a second return line in the event that internal pressure of the fuel supplying line is not reduced to less than a predetermined pressure when the fuel is returned through the first return line. As a result, overpressure at an upstream of the engine may be prevented, and thus a trip of the pump may be prevented.

### BRIEF DESCRIPTION OF THE DRAWINGS

The above and other features and advantages of the present invention will become readily apparent by reference to the following detailed description when considered in conjunction with the accompanying drawings wherein:
FIG. 1 is a conceptual view of a conventional system for supplying LNG fuel;
FIG. 2 is a conceptual view of a system for supplying LNG fuel according to an embodiment of the present invention;
FIG. 3 is a sectional view illustrating a fuel storage tank in the system for supporting LNG fuel according to an embodiment of the present invention; and
FIG. 4 is a conceptual view of a system for supplying LNG fuel according to another embodiment of the present invention.

### DETAILED DESCRIPTION

Hereinafter, the preferred embodiments of the present invention will be explained in more detail with reference to the accompanying drawings.

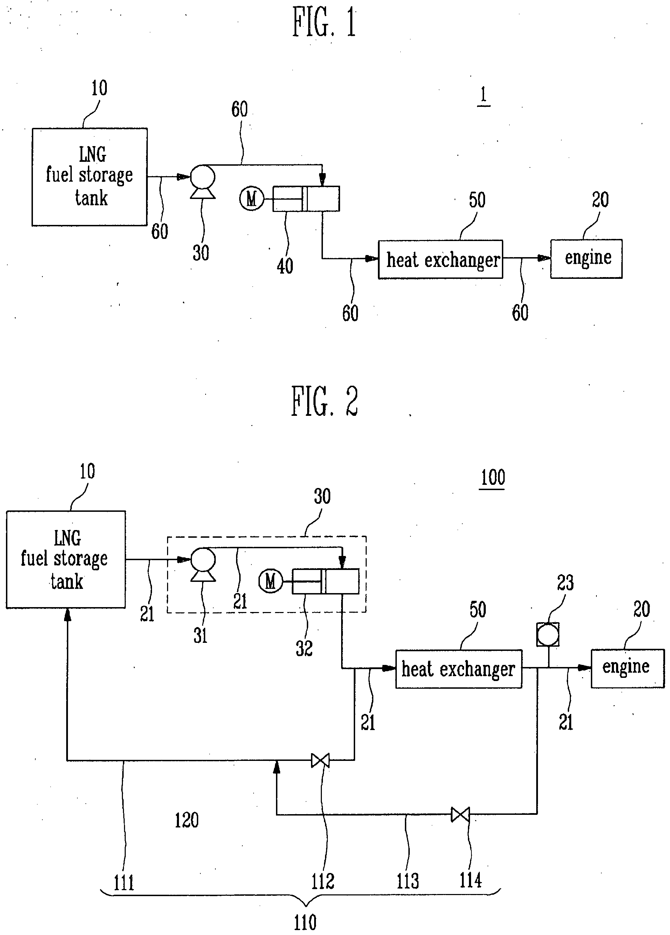

FIG. 1 is a conceptual view of a conventional system for supplying LNG fuel.

In FIG. 1, a conventional system 1 for supplying LNG fuel includes a fuel storage tank 10, an engine 20, a pump 30 and a heat exchanger 50. The pump 30 includes a boosting pump 31 and a high pressure pump 32. The LNG may include natural gas NG in supercritical state, etc., as well as an NG in liquid state.

In the system 1, the boosting pump 31 pressurizes fuel, outputted from the fuel storage tank 10 through a fuel supplying line 21, to a pressure of several bar to several tens of bar. Subsequently, the high pressure pump 32 pressurizes the pressurized fuel to a pressure required for the engine 20, e.g., 200bar to 400bar and supplies the pressurized fuel to the heat exchanger 50. Subsequently, the heat exchanger 50 may increase a temperature of the fuel, supplied from the pump 30, and supply the fuel in supercritical state to the engine 20. The fuel, supplied to the engine 20, may be in the supercritical state in which the fuel has a pressure of 200bar to 400bar and a temperature of 30°C to 60°C.

In the event that the engine 20 is suddenly stopped in response to a signal for stopping its driving, the fuel outputted from the pump 30 may incur overpressure of the heat exchanger 50 or the fuel supplying line 21. As a result, the system 1 may be shut down by power failure, or error, etc.

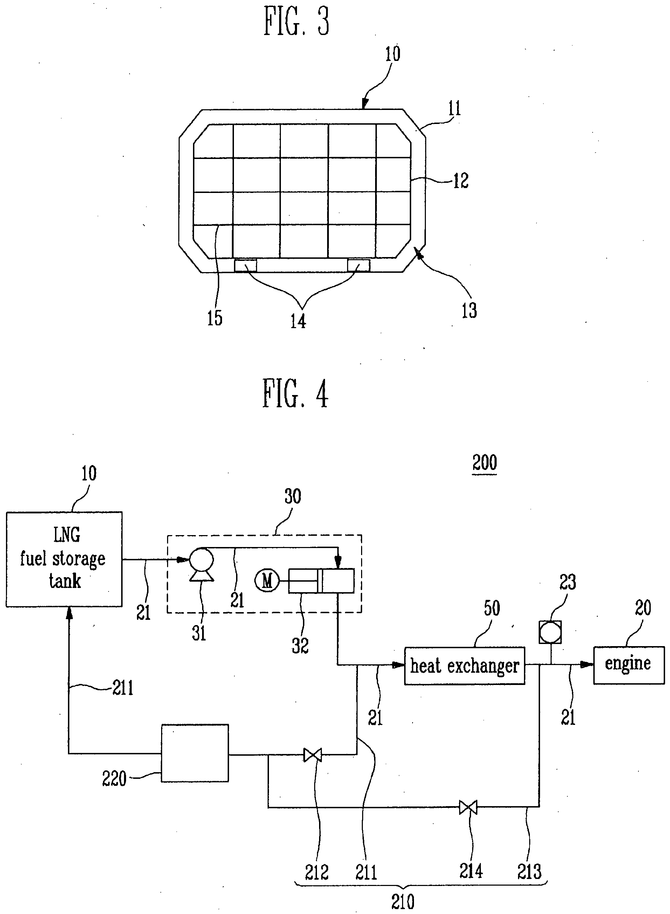

FIG. 2 is a conceptual view of a system for supplying LNG fuel according to an embodiment of the present invention, and FIG. 3 is a sectional view illustrating a fuel storage tank in the system for supporting LNG fuel according to an embodiment of the present invention.

In FIG. 2, the system 100 for supporting LNG fuel of the present embodiment may include a fuel storage tank 10, an engine 20, a pump 30, a heat exchanger 50 and a return line assembly 110. Although the fuel storage tank 10, the engine 20, the pump 30 and the heat exchanger 50, etc. are designated by the same reference numerals as shown in the conventional system 1, these components are not necessarily the same as those of the system 1.

The fuel storage tank 10 stores fuel to be supplied to the engine 20. The fuel storage tank 10 stores the fuel in liquid state. Here, the fuel storage tank 10 may be a pressure-type tank.

As shown in FIG. 3, the fuel storage tank 10 includes an outer tank 11, an inner tank 12 and an adiabatic section 13. The outer tank 11 may define an outer wall of the fuel storage tank 10 and be made of steel. The outer tank 11 may have a polygonal cross-sectional shape.

The inner tank 12 is formed in the outer tank 11 and may be supported in the outer tank 11 by a support 14. The support 14 may be formed below the inner tank 12 and be further formed on a side of the inner tank 12 to prevent left and right motions thereof.

The inner tank 12 may be made of stainless steel. The inner tank 12 maybe designed to withstand a pressure of 5bar to 10bar, e.g., 6bar since internal pressure of the inner tank 12 may be increased as fuel in the inner tank 12 is evaporated to generate evaporation gas.

A baffle 15 may be included in the inner tank 12. The baffle 15 refers to a grid plate. Since the baffle 15 allows internal pressure of the inner tank 12 to be uniformly distributed, the internal pressure may be prevented from being intensively applied to a part of the inner tank 12.

The adiabatic section 13 may be located between the inner tank 12 and the outer tank 11 and cut off transporting of external thermal energy to the inner tank 12. At this time, the adiabatic section 13 may be in a vacuum. The fuel storage tank 10 may withstand high pressure more efficiently as compared to common tanks since the adiabatic section 13 is in a vacuum. For example, the fuel storage tank 10 may withstand a pressure of 5bar to 20bar by using the adiabatic section 13 in a vacuum.

Since the system 100 of the present embodiment uses the fuel storage tank 10 including the adiabatic section 13 which is located between the outer tank 11 and the inner tank 12 and is in a vacuum, the evaporation gas may be minimally generated. In addition, the fuel storage tank 10 may not be damaged despite an increase in internal pressure thereof.

The engine 20 is driven by the fuel supplied from the fuel storage tank 10 to generate propulsion. Here, the engine 20 may be an MEGI engine or a dual fuel engine.

In the event that the engine 20 is the dual fuel engine, fuel and oil may not be mixed but may be selectively supplied. The fuel and the oil having different combustion temperatures may be prevented from being mixed, so that efficiency of the engine 20 may not be deteriorated.

In the engine 20, as a piston (not shown) in a cylinder (not shown) performs a reciprocating motion by combustion of the fuel, a crankshaft (not shown) connected to the piston may rotate, and a shaft (not shown) connected to the crankshaft may rotate. Thus, since a propeller (not shown) connected to the shaft rotates when the engine 20 is driven, the ship may move forward or backward.

The engine 20 may be configured to drive the propeller, generate electricity, or generate other forces. In other words, the kinds of the engine 20 are not limited. However, the engine 20 may be an internal combustion engine for generating a driving force by combusting the LNG.

The fuel supplying line 21 for delivering fuel may be provided between the fuel storage tank 10 and the engine 20. The boosting pump 31, the high pressure pump 32 and the heat exchanger 50, etc. may be provided on the fuel supplying line 21 to supply the fuel to the engine 20. Here, a fuel supplying valve (not shown) may be provided on the fuel supplying line 21, and the amount of supply of the fuel may be adjusted depending on an open degree of the fuel supplying valve.

A pressure measuring sensor 23 is provided on the fuel supplying line 21. The pressure measuring sensor 23 refers to a sensor for measuring a pressure of fuel in the fuel supplying line 21, and a plurality of the pressure measuring sensors 23 may be equipped. The pressure measuring sensor 23 may be provided at the downstream of the heat exchanger 50 for convenience of understanding. In another embodiment, a pressure measuring sensor may further be provided at the upstream of the heat exchanger 50.

In the event that as a sensing result of the pressure measuring sensor 23, the pressure of the fuel is more than a predetermined pressure (including a first predetermined value and a second predetermined value), the fuel is returned through the return line assembly 110.

The pump 30 is provided on the fuel supplying line 21 and pressurizes the fuel, outputted from the fuel storage tank 10, to high pressure. The pump 30 may include a boosting pump 31 and a high pressure pump 32.

The boosting pump 31 may be provided on the fuel supplying line 21 between the fuel storage tank 10 and the high pressure pump 32, and supply an adequate amount of the fuel to the high pressure pump 32, thereby preventing cavitation of the high pressure pump 32. The boosting pump 31 may extract the fuel from the fuel storage tank 10 and pressurize the extracted fuel in a range of several bar to several tens of bar. The fuel, passing through the boosting pump 31, may be pressurized to a pressure of 1bar to 25bar.

The fuel, stored in the fuel storage tank 10, is in liquid state. The boosting pump 31 may pressurize the fuel, stored in the LNG storage tank 10 or outputted from the fuel storage tank 10, to slightly increase the pressure and the temperature of the fuel. The fuel, pressurized by the boosting pump 31, may still be in liquid state.

The high pressure pump 32 pressurizes the fuel, outputted from the boosting pump 31, to high pressure so that the fuel may be supplied to the engine 20. After the fuel is outputted from the fuel storage tank 10 at a pressure of approximately 10bar, the fuel is primarily pressurized by the boosting pump 31. The high pressure pump 32 secondarily pressurizes the fuel in liquid state pressurized by the boosting pump 31 and supplies the secondarily pressurized fuel to the heat exchanger 50.

At this time, the high pressure pump 32 may pressurize the fuel up to a pressure of, for example, 200bar to 400bar required for the engine 20 and supply the pressurized fuel to the engine 20, so that the engine 20 may produce propulsion by using the fuel.

The high pressure pump 32 may pressurize the fuel in liquid state to high pressure, thereby changing a state of the fuel to supercooled liquid state. Here, the pressure of the fuel in the supercooled liquid state is higher than critical pressure, and temperature of the fuel in the supercooled liquid state is lower than critical temperature.

Particularly, the high pressure pump 32 may pressurize the fuel in liquid state, outputted from the boosting pump 31, to a high pressure of 200bar to 400bar and lower the temperature of the fuel to less than the critical temperature, thereby phase-changing the fuel to supercooled liquid state. Here, the temperature of the fuel in supercooled liquid state may be, for example, -140°C to -60°C lower than the critical temperature.

The heat exchanger 50 may be provided on the fuel supplying line 21 between the high pressure pump 32 and the engine 20 and heat the fuel supplied from the high pressure pump 32. The fuel may be supplied to the heat exchanger 50 by the high pressure pump 32. The heat exchanger 50 may heat the fuel in supercooled liquid state or supercritical state while maintaining the pressure of the fuel at a range from 200bar to 400bar, outputted from the high pressure pump 32, thereby phase-changing the fuel to fuel in supercritical state corresponding to a temperature of 30°C to 60°C. Subsequently, the heat exchanger 50 may supply the changed fuel to the engine 20.

The heat exchanger 50 may heat the fuel by steam supplied through a boiler (not shown), glycol water supplied from a glycol heater (not shown), electric energy, or waste heat generated from a generator or facilities, etc. provided in a ship.

The return line assembly 110 may be connected to upstream of the engine 20 on the fuel supplying line 21, return the fuel to the upstream of the engine 20, and be branched from the fuel supplying line 21.

Here, the return line assembly 110 prevents the pump 30 from being shut down when overpressure occurs at the upstream of the engine 20. The fuel is outputted from the pump 30 even when the engine 20 is suddenly stopped. However, the return line assembly 110 prevents the fuel from being supplied to the engine 20, and thus overpressure may not occur at the upstream of the engine 20, thereby preventing a trip of the pump 30.

The return line assembly 110 returns the fuel, outputted from the pump 30 or flowing through the heat exchanger 50, so that the fuel may not be supplied to the engine 20. The return line assembly 110 may include a first return line 111, an upstream overpressure valve 112, a second return line 113 and a downstream overpressure valve 114.

The first return line 111 may be provided at a front end of the heat exchanger 50. The first return line 111 may be connected to the fuel storage tank 10 and return the fuel from the fuel supplying line 21 to the fuel storage tank 10.

The upstream overpressure valve 112 may be provided on the first return line 111, and adjust the amount of supply of the fuel by opening/closing the first return line 111. Particularly, the upstream overpressure valve 112 may open the first return line 111 when the pressure measuring sensor 23 senses a pressure greater than the first predetermined value at the upstream of the engine 20. For example, in the event that an operation pressure (engine requirement pressure) is 300bar, the first predetermined valve may be 305bar or more. At this time, the upstream overpressure valve 112 may open the first return line 111.

The upstream overpressure valve 112 may be a three way valve, be provided at a connection point between the fuel supplying line 21 and the first return line 111, and close a path of the fuel supplied to the heat exchanger 50. The upstream overpressure valve 112 may be a high differential pressure valve provided on the first return line 111. In this case, an extra valve (not shown) may be set to a front end of the heat exchanger 50 and be locked by linking with the upstream overpressure valve 112 when the upstream overpressure valve 112 is opened, so that the fuel may be prevented from being supplied to the heat exchanger 50.

The second return line 113 may be provided between the heat exchanger 50 and the engine 20 and return the fuel from the fuel supplying line 21. The second return line 113 may join the first return line 111, and the fuel may be returned to the fuel storage tank 10 through the first and second return lines 111 and113. Here, since the fuel returned through the second return line 113 has been heated by the heat exchanger 50, the temperature of the fuel, returned through the second return line 113, may be higher than that of the fuel returned through the first return line 111.

The downstream overpressure valve 114 may be provided on the second return line 113 and adjust the amount of supply of the fuel by opening/closing the second return line 113. Particularly, the downstream overpressure valve 114 may open the second return line 113 when the pressure measuring sensor 23 senses a pressure greater than a second predetermined value at the upstream of the engine 20. For example, in the event that the operation pressure (engine requirement pressure) is 300bar, the second predetermined valve may be 310bar or more. At this time, the downstream overpressure valve 114 may open the second return line 113.

The second predetermined value may be higher than the first predetermined valve. The fuel may be further returned through the second return line 113 in the event that internal pressure of the fuel supplying line 21 is not reduced to a pressure less than a predetermined pressure when the fuel is returned through the first return line 111, and so overpressure may not occur at the upstream of the engine 20. That is, in the event that the system 100 is expected to be stopped as overpressure occurs due to stop of the engine 20, the fuel may be primarily returned through the first return line 111 and be secondarily returned through the second return line 113.

The downstream overpressure valve 114 may be a three way valve in the same or similar manner as the upstream overpressure valve 112, be provided at a connection point between the fuel supplying line 21 and the second return line 113, and close a path of the fuel supplied to the engine 20. The downstream overpressure valve 114 may be a high differential pressure valve provided on the second return line 113. In this case, extra valve (not shown) may be set to a front end of the engine 20 and be locked by linking with the downstream overpressure valve 114 when the downstream overpressure valve 114 is opened, so that the fuel may be prevented from supplied to the engine 20.

The second return line 113 may join the first return line 111, and the fuel may be returned to the fuel storage tank 10 through the first and second return lines 111and 113. One end of the first return line 111 and one end of the second return line 113 may be branched from the fuel supplying line 21, the other end of the second return line 113 may be connected to the first return line 111, and the first return line 111 may be connected to the fuel storage tank 10.

The fuel, outputted from the first return line 111 or the second return line 113, has a pressure of 300bar or more. However, the fuel storage tank 10 has an internal pressure of several bar. An internal pressure of the fuel storage tank 10 may be increased due to the returned fuel. As the returned fuel flows through the first return line 111 or the second return line 113, the pressure of the returned fuel reaches an internal pressure of the fuel storage tank 10 which is low pressure, and thus the internal pressure of the fuel storage tank 10 may be changed in a range of pressure which the fuel storage tank 10 withstands.

In the event that the pressure of the fuel supplying line 21 increases more than a predetermined value as operation of the engine 20 is stopped, the fuel may be returned through the first return line 111 and the second return line 113, thereby efficiently preventing a problem that the pump 30 and the heat exchanger 50, etc. are shut down by the fuel.

FIG. 4 is a conceptual view of a system for supplying LNG fuel according to another embodiment of the present invention. Like reference numerals refer to like or corresponding elements, and thus their description will be omitted.

Hereinafter, a system 200 will be described with reference to FIG. 4. A return line assembly 210 of the present embodiment may include a first return line 211, an upstream overpressure valve 212, a second return line 213 and a downstream overpressure valve 214. The return line assembly 210 may further include an auxiliary tank 220.

The first return line 211 and the second return line 213 may return the fuel to the fuel storage tank 10 as described above. The auxiliary tank 220 may be provided at a downstream of the first return line 211 and the second return line 213. The auxiliary tank 220 may have space for storing the fuel returned through the first return line 211 and the second return line 223. The auxiliary tank 220may be a vapor-liquid separator by which a gas may be separated from the returned fuel and then the remaining fuel may be returned to the fuel storage tank 10. Though not shown in FIG. 4, the auxiliary tank 220 may further include an exhaust line for outputting flash gas which is inert gas.

The upstream overpressure valve 212 may be provided on the first return line 211, and the downstream overpressure valve 214 may be provided on the second return line 213. These valves 212 and 214 may control flow of the fuel.

The process of returning the fuel to the fuel storage tank 10 through the return line assembly 110 and 210 is described with reference to FIG. 2 and FIG. 4.

However, the process is merely an embodiment provided for convenience of description, and the present invention is not limited to the process. That is, the return line assembly 110 and 210 may be connected to a suction drum (not shown), and the fuel may be returned to the suction drum through the return line assembly 110 and 210. Here, the suction drum may be connected to the pump 30, and fuel outputted from the suction drum may flow to the pump 30 and the heat exchanger 50.

In the event that the fuel outputted from the pump 30 is not supplied to the engine 20 because the engine 20 is stopped, the system 200 may return the fuel at a front end or a rear end of the heat exchanger 50, thereby preventing overpressure of the upstream of the engine 20 such as the pump 30, the heat exchanger 50 or the fuel supplying line 21. As a result, the system 200 may reduce shutdowns caused by power failure or errors, etc.

Although embodiments have been described with reference to a number of illustrative embodiments thereof, it should be understood that numerous other modifications and embodiments can be devised by those skilled in the art that will fall within the scope of the principles of this disclosure.

According to an exemplary embodiment, there is provided a system for supplying fuel including a fuel supplying line connected from a fuel storage tank to an engine and including a pressure measuring sensor, a pump provided on the fuel supplying line and configured to pressurize fuel outputted from the fuel storage tank, a heat exchanger provided on the fuel supplying line between the pump and the engine and configured to heat the fuel outputted from the pump, a first return line provided at a front end of the heat exchanger on the fuel supplying line and configured to return the fuel from the fuel supplying line, and a second return line provided at a rear end of the heat exchanger on the fuel supplying line and configured to return the fuel from the fuel supplying line.

## Claims

1. A system for supplying LNG fuel, the system comprising:
a fuel supplying line (21) connected from a fuel storage tank (10) to an engine (20) and including a pressure measuring sensor (23);
a pump (30) provided on the fuel supplying line and configured to pressurize fuel outputted from the fuel storage tank;
a heat exchanger (50) provided on the fuel supplying line between the pump and the engine and configured to heat the fuel outputted from the pump;
a first return line (111) provided at a front end of the heat exchanger on the fuel supplying line and configured to return the fuel from the fuel supplying line; and
a second return line (113) provided at a rear end of the heat exchanger on the fuel supplying line and configured to return the fuel from the fuel supplying line,
wherein the fuel is returned through the first return line or the second return line when pressure of the fuel is sensed to be more than a predetermined pressure by the pressure measuring sensor, and
wherein the first return line and the second return line are connected to the fuel storage tank, and the fuel is returned to the fuel storage tank through the first return line or the second return line.

2. The system of claim 1, further comprising an auxiliary tank (220) located at a downstream of the first return line and the second return line.

3. The system of claim 2, wherein the auxiliary tank is a vapor-liquid separator.

4. The system of one of claims 1 to 3, further comprising:
an upstream overpressure valve (112) provided on the first return line and configured to adjust an amount of supply of the fuel; and
a downstream overpressure valve (114) provided on the second return line and configured to adjust an amount of supply of the fuel.

5. The system of claim 4, wherein the predetermined pressure includes a first predetermined value and a second predetermined value,
the upstream overpressure valve opens the first return line when the pressure measuring sensor senses a pressure more than the first predetermined value, and
the downstream overpressure valve opens the second return line when the pressure measuring sensor senses a pressure more than the second predetermined value.

6. The system of claim 5, wherein the second predetermined value is higher than the first predetermined value.

7. The system of claim 6, wherein the first predetermined value is higher than a pressure required for the engine by 5bar, and the second predetermined value is higher than the pressure required for the engine by 10bar.

8. The system of one of claims 1 to 7, wherein the pump includes a high pressure pump (32) for pressurizing the fuel outputted from the fuel storage tank to a pressure of 200bar to 400bar.

9. The system of claim 8, wherein the pump further includes a boosting pump (31) provided on the fuel supplying line between the fuel storage tank and the high pressure pump and configured to pressurize the fuel, stored in the fuel storage tank or outputted from the fuel storage tank, and supply the fuel to the high pressure pump.

10. The system of claim 9, wherein the boosting pump pressurizes the fuel, outputted from the fuel storage tank, to a pressure of 1bar to 25bar.

## Patentansprüche

1. System zum Zuführen von LNG-Treibstoff, wobei das System umfasst:
eine Treibstoffzuführungsleitung (21), welche von einem Treibstoffspeichertank (10) mit einem Motor (20) verbunden ist und welche einen Druckmesssensor (23) enthält;
eine Pumpe (30), welche an der Treibstoffzuführungsleitung vorgesehen ist und welche dazu eingerichtet ist, aus dem Treibstoffspeichertank ausgegebenen Treibstoff unter Druck zu setzen;
einen Wärmetauscher (50), welcher an der Treibstoffzuführungsleitung zwischen der Pumpe und dem Motor vorgesehen ist und welcher dazu eingerichtet ist, den aus der Pumpe ausgegebenen Treibstoff zu erwärmen;
eine erste Rückführungsleitung (111), welche an einem vorderen Ende des Wärmetauschers an der Treibstoffzuführungsleitung vorgesehen ist und welche dazu eingerichtet ist, den Treibstoff aus der Treibstoffzuführungsleitung zurückzuführen; und
eine zweite Rückführungsleitung (113), welche an einem hinteren Ende des Wärmetauschers an der Treibstoffzuführungsleitung vorgesehen ist und welche dazu eingerichtet ist, den Treibstoff aus der Treibstoffzuführungsleitung zurückzuführen,
wobei der Treibstoff durch die erste Rückführungsleitung oder die zweite Rückführungsleitung zurückgeführt wird, wenn Druck des Treibstoffs durch den Druckmesssensor gemessen wird, der größer als ein vorbestimmter Druck ist, und
wobei die erste Rückführungsleitung und die zweite Rückführungsleitung mit dem Treibstoffspeichertank verbunden sind und der Treibstoff zu dem Treibstoffspeichertank durch die erste Rückführungsleitung oder die zweite Rückführungsleitung zurückgeführt wird.

2. System nach Anspruch 1, ferner umfassend einen Hilfstank (220), welcher sich stromabwärts der ersten Rückführungsleitung und der zweiten Rückführungsleitung befindet.

3. System nach Anspruch 2, wobei der Hilfstank ein Gas-Flüssigkeit-Abscheider ist.

4. System nach einem der Ansprüche 1 bis 3, ferner umfassend:
ein stromaufwärtiges Überdruckventil (112), welches an der ersten Rückführungsleitung vorgesehen ist und welches dazu eingerichtet ist, eine Zuführungsmenge des Treibstoffs einzustellen; und
ein stromabwärtiges Überdruckventil (114), welches an der zweiten Rückführungsleitung vorgesehen ist und welches dazu eingerichtet ist, eine Zuführungsmenge des Treibstoffs einzustellen.

5. System nach Anspruch 4, wobei der vorbestimmte Druck einen ersten vorbestimmten Wert und einen zweiten vorbestimmten Wert enthält,
das stromaufwärtige Überdruckventil die erste Rückführungsleitung öffnet, wenn der Druckmesssensor einen Druck größer als den ersten vorbestimmten Wert misst, und
das stromabwärtige Überdruckventil die zweite Rückführungsleitung öffnet, wenn der Druckmesssensor einen Druck größer als den zweiten vorbestimmten Wert misst.

6. System nach Anspruch 5, wobei der zweite vorbestimmte Wert höher als der erste vorbestimmte Wert ist.

7. System nach Anspruch 6, wobei der erste vorbestimmte Wert um 5 bar höher als ein für den Motor erforderlicher Druck ist, und der zweite vorbestimmte Wert um 10 bar höher als der für den Motor erforderliche Druck ist.

8. System nach einem der Ansprüche 1 bis 7, wobei die Pumpe eine Hochdruckpumpe (32) zum Unterdrucksetzen des aus dem Treibstoffspeichertank ausgegebenen Treibstoffs auf einen Druck von 200 bar bis 400 bar enthält.

9. System nach Anspruch 8, wobei die Pumpe ferner eine Erhöhungspumpe (31) enthält, welche an der Treibstoffzuführungsleitung zwischen dem Treibstoffspeichertank und der Hochdruckpumpe vorgesehen ist und welche dazu eingerichtet ist, den in dem Treibstoffspeichertank gespeicherten oder aus dem Treibstoffspeichertank ausgegebenen Treibstoff unter Druck zu setzen und den Treibstoff an die Hochdruckpumpe zuzuführen.

10. System nach Anspruch 9, wobei die Erhöhungspumpe den aus dem Treibstoffspeichertank ausgegebenen Treibstoff auf einen Druck von 1 bar bis 25 bar unter Druck setzt.

## Revendications

1. Système d'alimentation en carburant de gaz naturel liquéfié, le système comprenant :
une conduite d'alimentation en carburant (21) reliée depuis un réservoir de stockage de carburant (10) à un moteur (20) et comprenant un capteur de pression (23) ;
une pompe (30) disposée sur la conduite d'alimentation en carburant et configurée pour mettre sous pression le carburant provenant du réservoir de stockage de carburant ;
un échangeur de chaleur (50) disposé sur la conduite d'alimentation en carburant entre la pompe et le moteur et configuré pour chauffer le carburant provenant de la pompe ;
une première conduite de retour (111) disposée à une extrémité avant de l'échangeur de chaleur sur la conduite d'alimentation en carburant et configurée pour renvoyer le carburant provenant de la conduite d'alimentation en carburant ; et
une deuxième conduite de retour (113) disposée à une extrémité arrière de l'échangeur de chaleur sur la conduite d'alimentation en carburant et configurée pour renvoyer le carburant provenant de la conduite d'alimentation en carburant ;
dans lequel le carburant est renvoyé via la première conduite de retour ou la deuxième conduite de retour quand le capteur de pression détecte qu'une pression du carburant est supérieure à une pression prédéterminée, et
dans lequel la première et la deuxième conduite de retour sont reliées au réservoir de stockage de carburant, et le carburant est renvoyé au réservoir de stockage de carburant via la première conduite de retour ou la deuxième conduite de retour.

2. Système selon la revendication 1, comprenant en outre un réservoir auxiliaire (220) situé en aval de la première conduite de retour et la deuxième conduite de retour.

3. Système selon la revendication 2, dans lequel le réservoir auxiliaire est un séparateur vapeur-liquide.

4. Système selon l'une des revendications 1 à 3, comprenant en outre :
une soupape de surpression en amont (112) disposée sur la première conduite de retour et configurée pour régler une quantité d'alimentation en carburant ; et
une soupape de surpression en aval (114) disposée sur la deuxième conduite de retour et configurée pour régler une quantité d'alimentation en carburant.

5. Système selon la revendication 4, dans lequel la pression prédéterminée comprend une première valeur prédéterminée et une deuxième valeur prédéterminée,
la soupape de surpression en amont ouvre la première conduite de retour quand le capteur de pression détecte une pression supérieure à la première valeur prédéterminée, et
la soupape de surpression en aval ouvre la deuxième conduite de retour quand le capteur de pression détecte une pression supérieure à la deuxième valeur prédéterminée.

6. Système selon la revendication 5, dans lequel la deuxième valeur prédéterminée est supérieure à la première valeur prédéterminée.

7. Système selon la revendication 6, dans lequel la première valeur prédéterminée est supérieure de 5 bar à une pression requise pour le moteur, et la deuxième valeur prédéterminée est supérieure de 10 bar à la pression requise pour le moteur.

8. Système selon l'une des revendications 1 à 7, dans lequel la pompe comprend une pompe haute pression (32) pour mettre sous pression le carburant provenant du réservoir de stockage de carburant à une pression de 200 bar à 400 bar.

9. Système selon la revendication 8, dans lequel la pompe comprend en outre une pompe de surpression (31) disposée sur la conduite d'alimentation en carburant entre le réservoir de stockage de carburant et la pompe haute pression et configurée pour mettre sous pression le carburant, stocké dans le réservoir de stockage de carburant ou provenant du réservoir de stockage de carburant, et alimenter en carburant la pompe haute pression.

10. Système selon la revendication 9, dans lequel la pompe de surpression met sous pression le carburant, provenant du réservoir de stockage de carburant, à une pression de 1 bar à 25 bar.
